# EUROPEAN PATENT APPLICATION

(11) **EP 4 700 362 A1**
(43) Date of publication of application: **25.02.2026**
(21) Application number: 25196244.5
(22) Date of filing: 15.08.2025
(51) Int. Cl.: G01N 3/10

(54) **ADAPTIVE AND AUTOMATIC SWITCHING BETWEEN PNEUMATIC AND HYDRAULIC MODES**

(30) Priority: 19.08.2024 US 202463684725 P; 05.08.2025 US 202519290615
(71) Applicant: Illinois Tool Works Inc., Glenview IL 60025 (US)
(72) Inventor: BRADSHAW, Nicholas H., Glenview, 60025 (US); ARYANA, Chadwick Kadek, Glenview, 60025 (US)
(74) Representative: HGF

(57) **Abstract**

Systems and methods are provided for adaptive and automatic switching between pneumatic and hydraulic modes. An example system includes one or more handling components configured for supporting mechanical testing, where each handling component configured for use in conjunction with handling material during the mechanical testing, and where each handling component is pneumatically or hydraulically driven, at least one controller configured for controlling at least one handling component, and circuitry configurable to provide adaptive and automatic switching among a plurality of modes of operation that include, at least a pneumatic mode and a hydraulic mode. The circuitry is configured to, when providing the adaptive and automatic switching, determine hardware configuration of the system, select based on the hardware configuration, a mode of operation, with the selected mode of operation being one of the pneumatic mode and the hydraulic mode, and when needed, cause a switch to the determined mode of operation.

## Description

### CLAIM OF PRIORITY

This patent application claims priority to and claims benefit from United States Provisional Patent Application Serial No. 63/684,725, filed on August 19, 2024. The above identified application is hereby incorporated herein by reference in its entirety.

### TECHNICAL FIELD

Aspects of the present disclosure relates generally to mechanical testing solutions. More specifically, certain implementations of the present disclosure relate to systems and methods for adaptive and automatic switching between pneumatic and hydraulic modes.

### BACKGROUND

Limitations and disadvantages of conventional solutions, if any existed, will become apparent to one management of skill in the art, through comparison of such approaches with some aspects of the present methods and systems as set forth in the remainder of this disclosure with reference to the drawings.

### BRIEF SUMMARY

Aspects of the present disclosure relate to testing solutions, and particularly to systems and methods for use in conjunction therewith. More specifically, various implementations in accordance with the present disclosure are directed to methods and systems for adaptive and automatic switching between pneumatic and hydraulic modes, substantially as illustrated by or described in connection with at least one of the figures, and as set forth more completely in the claims.

These and other advantages, aspects and novel features of the present disclosure, as well as details of an illustrated implementation thereof, will be more fully understood from the following description and drawings.

### BRIEF DESCRIPTION OF THE DRAWINGS

Fig. 1 illustrates an example testing system.
Fig. 2 illustrates an example system that may support use of pneumatic and hydraulic grips or handsets.
Fig. 3 illustrates an example hydraulic grip controller.
Figs. 4A-4D illustrate different configurations of an example system supporting pneumatic and hydraulic modes and adaptive and automatic switching therebetween.
Fig. 5 illustrates an example hardware switching in a system supporting pneumatic and hydraulic modes to provide adaptive and automatic switching between the modes.
Fig. 6 illustrates a flowchart of an example switch logic that may be used for providing adaptive and automatic switching between pneumatic and hydraulic modes of operation.

### DETAILED DESCRIPTION

Various implementations in accordance with the present disclosure are directed to providing enhanced and optimized testing solutions, particularly by implementing and operating systems or setups that provide adaptive and automatic switching between pneumatic and hydraulic modes.

As utilized herein the terms "circuits" and "circuitry" refer to physical electronic components (e.g., hardware), and any software and/or firmware ("code") that may configure the hardware, be executed by the hardware, and or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may, for example, operate on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic component (e.g., hardware) and any software and/or firmware ("code") that may configure the hardware, be executed by the hardware, and or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not enabled (e.g., by a user-configurable setting, factory trim, etc.).

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

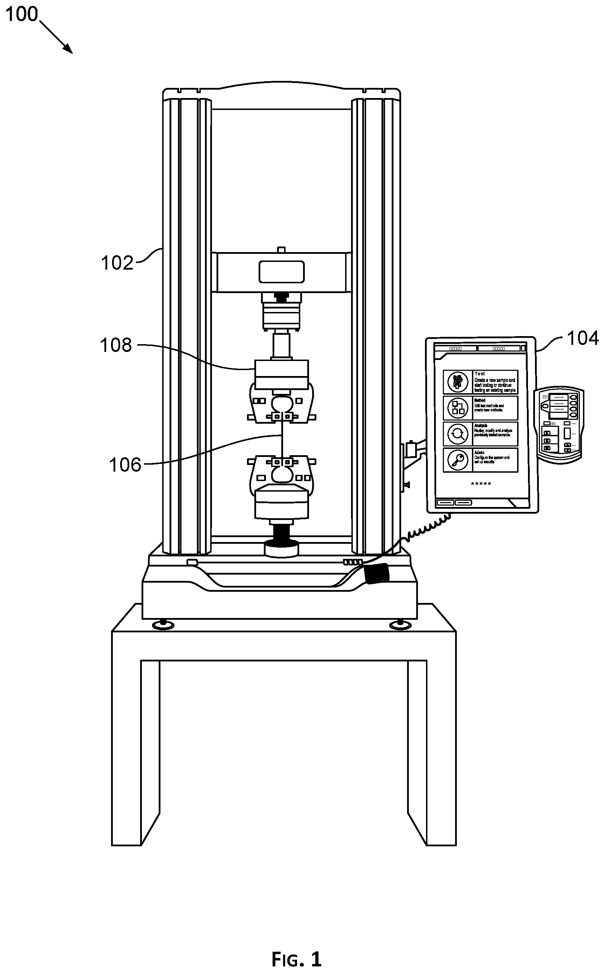

Fig. 1 illustrates an example testing system. Shown in Fig. 1 is an example testing system 100 that may be configured to perform testing, such as mechanical property testing.

The testing system 100 may be, for example, a universal testing system capable of static mechanical testing. The testing system 100 may perform, for example, compression strength testing, tension strength testing, shear strength testing, bend strength testing, deflection strength testing, tearing strength testing, peel strength testing (e.g., strength of an adhesive bond), and/or any other compressive, tensile, torsion, thermal, and/or impact testing. Additionally, or alternatively, the testing system 100 may perform dynamic testing.

As shown in Fig. 1, the testing system 100 comprises a test fixture 102 and a computing device 104 communicatively coupled to the test fixture 102. The test fixture 102 applies loads to a material 106 (e.g., film specimen) under test and measures the mechanical properties of the test, such as displacement of the material 106 and/or force applied to the material 106.

The computing device 104 may comprise suitable circuitry configured for providing various computing related functions in the testing system 100. For example, the computing device 104 may be used to configure the test fixture 102, control the test fixture 102, and/or receive measurement results from the test fixture 102 for processing, display, reporting, and/or any other desired purposes.

In some implementations, testing systems (e.g., testing system 100) may comprise additional components and/or devices that may be used in facilitating and/or supporting operation of the testing system 100 and/or conducting testing performed therein. Such components and/or devices may comprise, e.g., grips, handsets, and the like. In some instances, at least some of the components and/or devices may be driven, such as hydraulically or pneumatically. For example, as shown in Fig. 1, the testing system 100 comprises one or more grips 108, which are used in holding the material 106.

In accordance with the present disclosure, suitable systems (e.g., testing system 100) may be configured to support adaptive and automatic switching between different types of driving modes, such as between hydraulic or pneumatic operations. In this regard, such systems, in which some components may be driven hydraulically or pneumatically, may be configured to adaptively and automatically-that is, without requiring user input, at least real-time input-determine which mode of operation (e.g., hydraulic or pneumatic) would be used, such as for particular component (e.g., grip, handset, etc.), and where necessary switching to the determined mode.

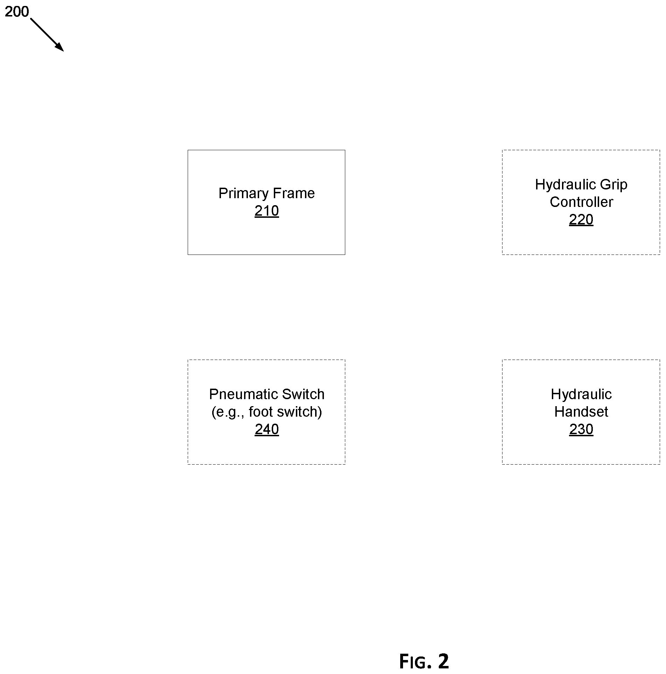

In particular, in various implementations the mode of operation may be determined based on, e.g., such factors as hardware configuration in the system. In this regard, hardware configuration may comprise and/or entail assessing various parameters and/or conditions associated with particular devices and/or components in the system that may be pertinent to the determining of the suitable mode of operation. The adaptive and automatic switching between modes of operation may also comprise assessing other factors that may be pertinent, such as software configuration (e.g., to determine if it matches the hardware configuration). These features and more are described in more detail below, with respect to Figs. 2-6.

Nonetheless, while various references are made herein to hydraulic and/or pneumatic grips or handsets, the disclosure is not limited to such components and/or devices. Rather, it should be readily understood that the solutions described herein are applicable to all suitable hydraulically and/or pneumatically driven components or devices that may be configured for use in systems such as the testing system 100.

Fig. 2 illustrates an example system that may support use of pneumatic and hydraulic grips or handsets. Shown in Fig. 2 is example system 200. In this regard, the system 200 may be a simplified block representation of a testing system, such as the testing system 100 of Fig. 1, which may be configured to provide and/or support adaptive and automatic switching between pneumatic and hydraulic modes.

For example, as illustrated in Fig. 2, the system 200 comprises a primary frame 210, a hydraulic grip controller 220, a hydraulic handset (or grip) 230, and a pneumatic switch (e.g., foot switch) 240. In this regard, the primary frame 210 may correspond to the main frame of the system, comprising the main structures and/or components of the system. For example, with reference to the testing system 100 of Fig. 1, the primary frame may correspond to the combination of the test fixture 102 and the computing device 104.

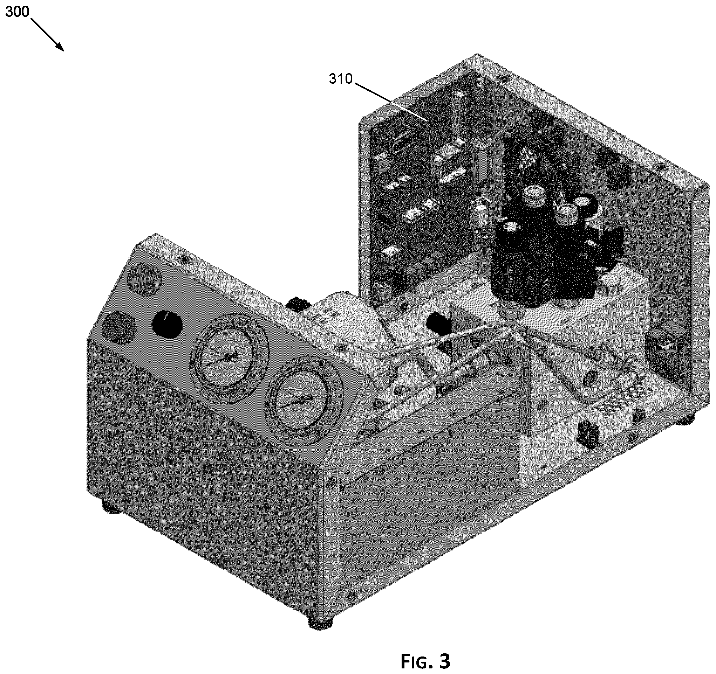

The hydraulic grip controller 220 may comprise suitable hardware and circuitry for providing hydraulic grip control related functions. An example implementation of hydraulic grip controller is shown in Fig. 3. The hydraulic handset (or grip) 230 may comprise a hydraulically driven grip or handset that may be used in the system 200 (e.g., during testing operations performed therein).

The pneumatic switch (e.g., foot switch) 240 may comprise a switch used in conjunction with pneumatically driven components or devices (e.g., grip or handset) in the system 200 (e.g., during testing operations performed therein). Further, while not shown in Fig. 2, in some implementations system 200 may comprise a pneumatic grip (or handset) controller, which may be utilized in providing pneumatic grip (or handset) control related functions. Such pneumatic grip (or handset) controller may be a separate, dedicated component that may be connected or otherwise engages the primary frame 210. In some instances, the pneumatic grip (or handset) controller instead may be directly incorporated into and/or combined with the primary frame 210. In some instances, the pneumatic grip (or handset) controller instead may be directly incorporated into and/or combined with the hydraulic grip controller 220-that is, a single controller may be used, being configured to provide both pneumatic control related functions and hydraulic control related functions. For example, the hydraulic grip controller 220 may be configurable to optionally provide the pneumatic control related functions, such as by reconfiguring various components thereof.

In accordance with the present disclosure, the system 200 may be configured to provide and/or support adaptive and automatic switching between pneumatic and hydraulic modes. In this regard, in various implementations based on the present disclosure, systems such as the system 200, in which components may be driven hydraulically or pneumatically, may be configured to adaptively and automatically-that is, without requiring user input, at least real-time input-determine in which mode of operation (e.g., hydraulic or pneumatic) would be used for particular component (e.g., grip, handset, etc.), and if necessary may switch to the determined mode.

The determination may be made based on, e.g., the hardware configuration in the system. In this regard, as used herein, hardware configuration may comprise devices and/or components that at present, the connectivity of at least some of these devices and/or components, whether (or not) one or more of these devices and/or components are powered on or active, etc. For example, in the system 200, the adaptive and automatic switching between pneumatic and hydraulic modes may be based on assessing one or more of presence, power state, and connectivity of one or more of the hydraulic grip controller 220, the hydraulic handset (or grip) 230, and the pneumatic switch (e.g., foot switch) 240.

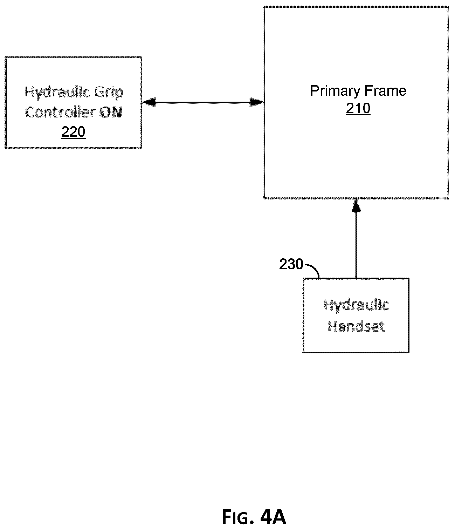

The conditions and corresponding operation mode for various different example hardware configurations are summarized in Table 1, below. These configurations are illustrated in and described in more detail with respect to Figs. 4A-4D.

**Table 1: conditions and corresponding operation mode for different configurations**

| Frame connection status | Hydraulic grip controller power status | Hydraulic handset installation location | Operation |
|---|---|---|---|
| Connected | ON | NOT hydraulic grip controller | Hydraulic |
| Connected | ON | Hydraulic grip controller | Pneumatic |
| Connected | OFF | N/A (don't care) | Pneumatic |
| Disconnected | ON | Hydraulic grip controller | Hydraulic |

In some instances, the adaptive and automatic switching between pneumatic and hydraulic modes may also comprise assessing the software configuration of the system, such as to determine if the software configuration is consistent with, and matches the hardware configuration.

Fig. 3 illustrates an example hydraulic grip controller. Shown in Fig. 3 is a hydraulic grip controller 300. In this regard, the hydraulic grip controller 300 represents an example implementation of the hydraulic grip controller 220 of Fig. 2.

As shown in Fig. 3, the hydraulic grip controller 300 has a housing made up of sheets (e.g., metals) that combine to create an enclosure containing the components of hydraulic grip controller 300. Such components may comprise, e.g., power units, pressure transducers, thermal switches, manifold, piping, connectors, gauges, etc. The hydraulic grip controller 300 further comprises a circuit board 310 that comprises suitable circuitry configured for providing the processing (and/or other computing) functions required for operating the hydraulic grip controller 300.

In various implementations based on the present disclosure, the circuit board 310 may be configured to providing and/or supporting the adaptive and automatic switching between pneumatic and hydraulic modes as described herein. For example, the circuit board 310 (or more specifically circuitry thereof) may be configured to implement and utilize switching logic used in determining the proper mode of operation, and/or in facilitating switching the determined mode, such as by generating control signals and/or by selecting the corresponding components (e.g., grip controller) to enable operating in the determined mode.

Figs. 4A-4D illustrate different configurations of an example system supporting pneumatic and hydraulic modes and adaptive and automatic switching therebetween. Shown in Figs. 4A-4D are different configurations of the example system 200 shown in Fig. 2.

In particular, Fig. 4A illustrates a first configuration ("configuration A") in which the hydraulic grip controller 220 is connected to the primary frame 210, and is turned/powered on (that is "ON"), with the hydraulic handset (or grip) 230 connected to the primary frame 210. In this configuration, with the hydraulic grip controller 220 being "ON" and with the hydraulic handset (or grip) 230 connected directly to the primary frame 210, the system is configured (switched) for hydraulic operation.

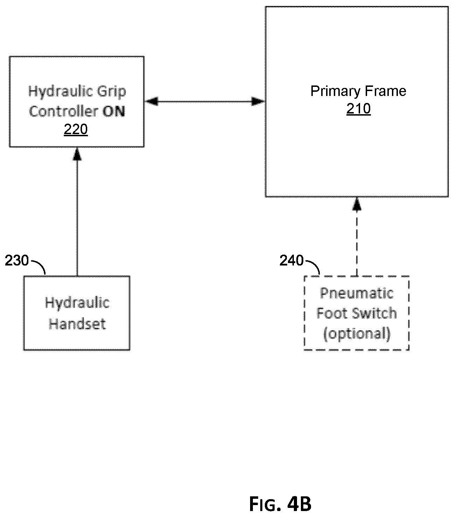

Fig. 4B illustrates a second configuration ("configuration B") in which the hydraulic grip controller 220 is connected to the primary frame 210, and is turned/powered on (that is "ON"), with the hydraulic handset (or grip) 230 connected to the hydraulic grip controller 220, and additionally with the pneumatic foot switch 240 is connected to the primary frame 210. In this configuration, even though the hydraulic grip controller 220 is "ON" with the hydraulic handset (or grip) 230 is connected directly to the hydraulic grip controller 220, with the pneumatic foot switch 240 connected directly to the primary frame 210 the system is configured (switched) for pneumatic operation.

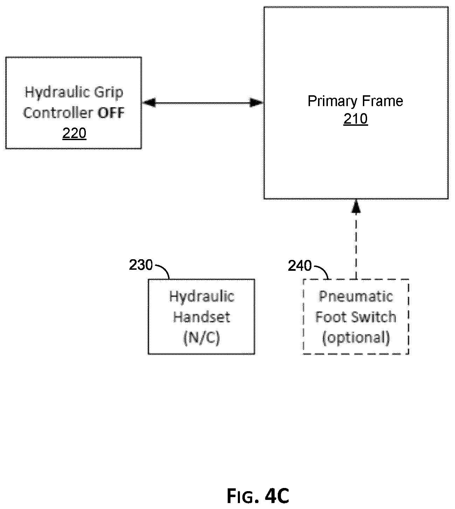

Fig. 4C illustrates a third configuration ("configuration C") in which the hydraulic grip controller 220 is connected to the primary frame 210, but is turned/powered off (that is "OFF"), with the hydraulic handset (or grip) 230 not connected to the primary frame 210 (to either of the hydraulic grip controller 220 and the primary frame 210), but with the pneumatic foot switch 240 is connected to the primary frame 210. In this configuration, with the hydraulic grip controller 220 being "OFF" and with the primary frame 210 connected (to the pneumatic foot switch 240), the system is configured (switched) for pneumatic operation, irrespective of the installation location of the hydraulic handset (or grip) 230.

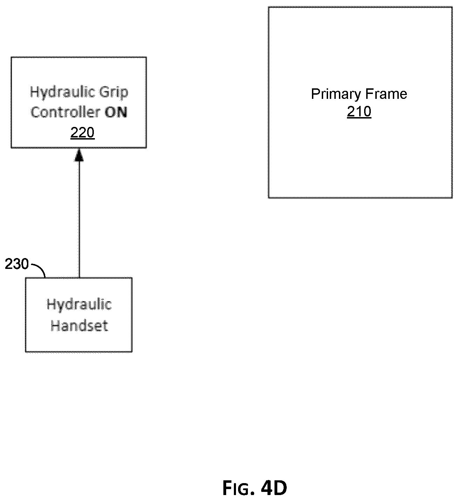

Fig. 4D illustrates a fourth configuration ("configuration D") in which the hydraulic grip controller 220 is connected to the primary frame 210, and is turned/powered on (that is "ON"), with the hydraulic handset (or grip) 230 connected to the hydraulic grip controller 220, and the primary frame 210 not connected to anything. In this configuration, with the hydraulic grip controller 220 is "ON" with the hydraulic handset (or grip) 230 is connected directly to the hydraulic grip controller 220, the system is configured (switched) for hydraulic operation even though the primary frame 210 not connected to anything.

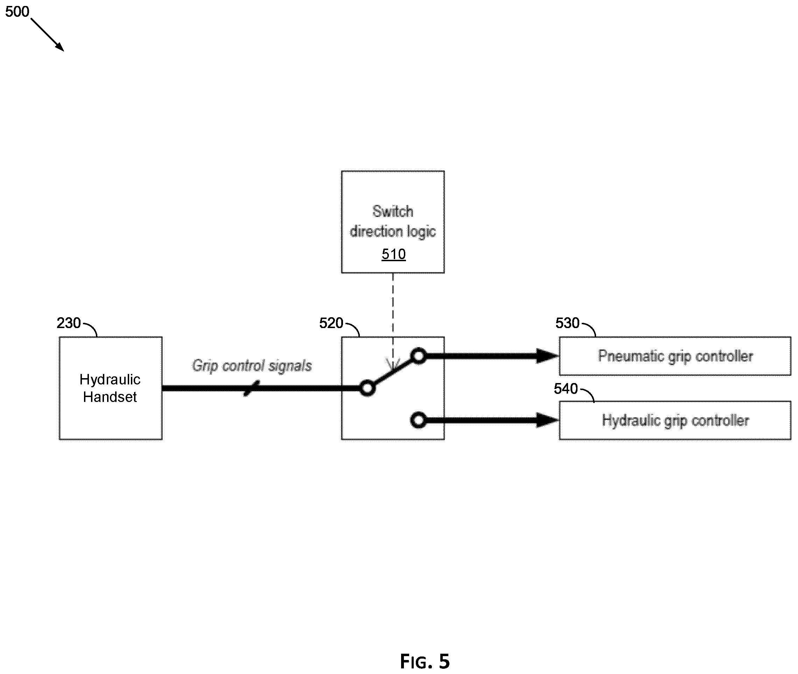

Fig. 5 illustrates an example hardware switching control in a system supporting pneumatic and hydraulic modes to provide adaptive and automatic switching between the modes. Shown in Fig. 5 is hardware switching control 500.

The hardware switching control 500 may comprise suitable hardware (including suitable circuitry) that is configured to provide switching control to facilitate switching between pneumatic and hydraulic modes of operation in suitable system, such as the system 200. In this regard, the hardware switching control 500 may be implemented in one or more components of the system. For example, the hardware switching control 500 (or at least a portion thereof) may be implemented in the hydraulic grip controller component (e.g., the hydraulic grip controller 300, such as in the circuit board 310).

As shown in Fig. 5, the hardware switching control 500 comprises a switch direction logic (module) 510 and a switch (module) 520. The switch 520 may comprise suitable circuitry for selecting between two outputs, corresponding to the two modes of operation-namely, pneumatic and hydraulic modes of operation. In this regard, the switch 520 may select between connecting to a pneumatic grip controller 530 and a hydraulic grip controller 540, to facilitate operating in, respectively, pneumatic operation and hydraulic operation. The switch 520 may be driven by grip control signals received from a grip or handset (e.g., the hydraulic handset 220 in the system 200).

Further, the switching performed in the switch 520 may be controlled by the switch direction logic 510. In this regard, the switch direction logic (module) 510 may comprise suitable circuitry for generating control signals to control operation (e.g., switching) of the switch 520. The switch direction logic (module) 510 may be programmed to control the switching based on predefined switching scheme, which may be configured based on various hardware configurations that may be supported in the system.

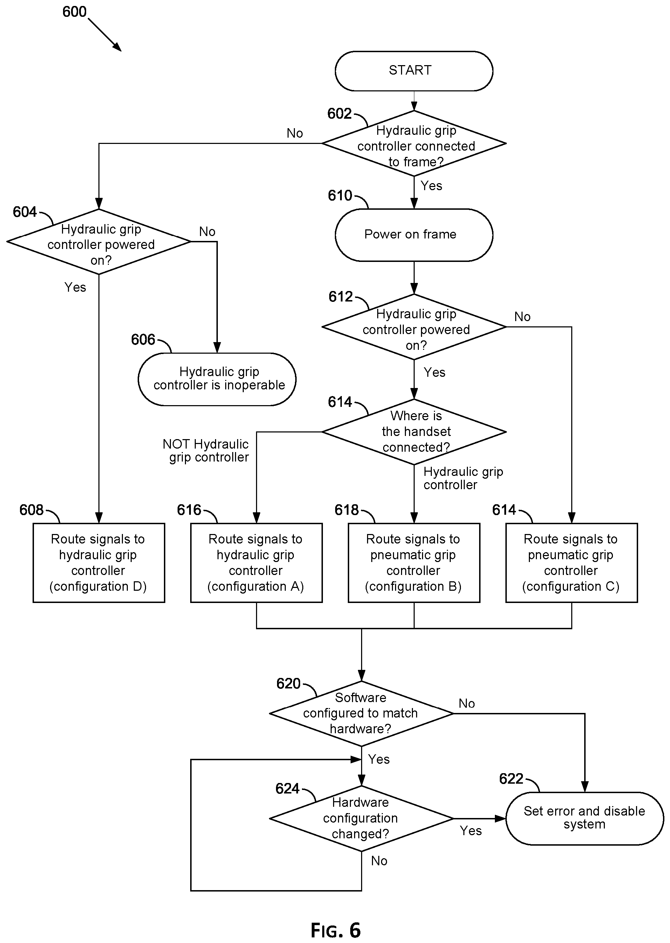

Fig. 6 illustrates a flowchart of an example switch logic that may be used for providing adaptive and automatic switching between pneumatic and hydraulic modes of operation. Shown in Fig. 6 is flow chart 600, comprising a plurality of example steps (represented as blocks 602-624) that may be performed in a suitable system (e.g., the system 200) to provide adaptive and automatic switching between pneumatic and hydraulic modes of operation. In particular, the process captured in the flow chart 600 may be executed in the switch direction logic 510 of the hardware switching control 500 of Fig. 5.

After a start step, in which the system may be set up and/or configured, in step 602, a check whether the hydraulic grip controller is connected to the frame is performed. In instances where it is determined that hydraulic grip controller is not connected to the frame, the process proceeds to step 604.

In step 604, a check whether the hydraulic grip controller is powered on is performed. In instances where it is determined that hydraulic grip controller is not powered on, the process proceeds to step 606, where the hydraulic grip controller is marked as inoperable.

Returning to step 604, in instances where it is determined that hydraulic grip controller is powered on, the process proceeds to step 608, where signals are routed to the hydraulic grip controller. This outcome corresponds to the system being in "Configuration D" as shown in and described with respect to Fig. 4D.

Returning to step 602, instances where it is determined that hydraulic grip controller is connected to the frame, the process proceeds to step 610, where the frame is powered on. The process then proceeds to step 612.

In step 612, a check whether the hydraulic grip controller is powered on is performed. In instances where it is determined that hydraulic grip controller is not powered on, the process proceeds to step 614, where signals are routed to the pneumatic grip controller. This outcome corresponds to the system being in "Configuration C" as shown in and described with respect to Fig. 4C. The process then proceeds to step 620.

Returning to step 612, instances where it is determined that hydraulic grip controller is powered on, the process proceeds to step 614, where a check where the handset is connected is performed. In instances where it is determined that the handset is connected to hydraulic grip controller, the process proceeds to step 618, where signals are routed to the hydraulic grip controller. This outcome corresponds to the system being in "Configuration B" as shown in and described with respect to Fig. 4B. The process then proceeds to step 620.

Returning to step 614, in instances where it is determined that the handset is not connected to hydraulic grip controller, the process proceeds to step 616, where signals are routed to the hydraulic grip controller. This outcome corresponds to the system being in "Configuration A" as shown in and described with respect to Fig. 4A. The process then proceeds to step 620.

In step 620, a check that the software is configured to match the hardware is performed. In instances where it is determined that the software is not configured to match the hardware, the process proceeds to step 622, where an error is set and the system is disabled.

Returning to step 620, in instances where it is determined that the software is configured to match the hardware, the process proceeds to step 624, where a check whether the hardware configuration changed is performed. In this regard, re-checking the hardware configuration may be done in various manner, such as continually, periodically (e.g., based on preset and/or configurable re-check duration or frequency), and/or in response to one or more particular triggers (which may be preset and/or configurable). For example, the re-checking may be done in response to detection of particular signals in the system.

In instances where it is determined that hardware configuration did not change, the process loops back to step 624 to re-check for hardware configuration changes, otherwise-that is, where it is determined that hardware configuration did change-the process proceeds to step 622.

An example system, in accordance with the present disclosure, comprises one or more handling components configured for supporting mechanical testing, wherein each handling component is configured for use in conjunction with handling material during the mechanical testing, and wherein each handling component is pneumatically or hydraulically driven; at least one controller configured for controlling at least one handling component; and circuitry configurable to provide adaptive and automatic switching among a plurality of modes of operation that comprise, at least a pneumatic mode and a hydraulic mode, wherein the circuitry is configured to, when providing the adaptive and automatic switching determine hardware configuration of the system; select, based on the hardware configuration a mode of operation, wherein the selected mode of operation is one of the pneumatic mode and the hydraulic mode; and when needed, cause a switch to the determined mode of operation.

In an example embodiment, the circuitry is configured to, when determining the hardware configuration determine a type of each of the one or more handling components; determine a connection related information for each of the at least one controller and the one or more handling components; and determine a power status for each of the at least one controller and the one or more handling components.

In an example embodiment, the circuitry is further configured to determine that software configuration of the system and/or at least one component of the system matches and/or is compatible with the determined hardware configuration.

In an example embodiment, the circuitry is further configured to, in response to a determination that the software configuration does not match and/or is incompatible with the determined hardware configuration, trigger one or more actions.

In an example embodiment, the one or more actions comprise at least one of setting error and disabling the system.

In an example embodiment, the circuitry is further configured to re-determine the hardware configuration of the system.

In an example embodiment, the circuitry is configured to re-determine the hardware configuration of the system continually, periodically, or in response to one or more triggers.

In an example embodiment, the one or more handling components comprise at least one of a handset or a grip.

In an example embodiment, the at least one controller comprises a hydraulic grip controller.

In an example embodiment, the at least one controller component comprises at least a portion of the circuitry.

In an example embodiment, the system further comprises a primary frame, and wherein the one or more handling components are configured for operation in conjunction with the primary frame.

In an example embodiment, the primary frame comprises at least a portion of the circuitry.

An example method, in accordance with the present disclosure, comprises in a system that supports mechanical testing operations, the system comprising one or more handling components for use in conjunction with handling material during the mechanical testing and at least one controller configured for controlling at least one handling component, wherein each handling component is pneumatically or hydraulically driven, providing adaptive and automatic switching among a plurality of modes of operation; wherein plurality of modes of operation comprises at least a pneumatic mode and a hydraulic mode; and wherein providing the adaptive and automatic switching comprises determining hardware configuration of the system; selecting, based on the hardware configuration a mode of operation, wherein the selected mode of operation is one of the pneumatic mode and the hydraulic mode; and when needed, causing a switch to the determined mode of operation.

In an example embodiment, determining the hardware configuration comprises determining a type of each of the one or more handling components; determining a connection related information for each of the at least one controller and the one or more handling components; and determining a power status for each of the at least one controller and the one or more handling components.

In an example embodiment, the method further comprises determining that software configuration of the system and/or at least one component of the system matches and/or is compatible with the determined hardware configuration.

In an example embodiment, the method further comprises, in response to a determination that the software configuration does not match and/or is incompatible with the determined hardware configuration, triggering one or more actions.

In an example embodiment, the one or more actions comprise at least one of setting error and disabling the system.

In an example embodiment, the method further comprises re-determining the hardware configuration of the system.

In an example embodiment, the method further comprises re-determining the hardware configuration of the system continually, periodically, or in response to one or more triggers.

Other implementations in accordance with the present disclosure may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Accordingly, various implementations in accordance with the present disclosure may be realized in hardware, software, or a combination of hardware and software. The present disclosure may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip.

Various implementations in accordance with the present disclosure may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present disclosure has been described with reference to certain implementations, it will be understood by those skilled in the art that various changes may be made and equivalents may be substituted without departing from the scope of the present disclosure. For example, block and/or components of disclosed examples may be combined, divided, re-arranged, and/or otherwise modified. In addition, many modifications may be made to adapt a particular situation or material to the teachings of the present disclosure without departing from its scope. Therefore, it is intended that the present disclosure is not limited to the particular implementation disclosed, but that the present disclosure will include all implementations falling within the scope of the appended claims.

Certain embodiments of the invention are described in the following clauses:
Clause 1. A system comprising:
   one or more handling components configured for supporting mechanical testing,
   wherein each handling component is configured for use in conjunction with handling material during the mechanical testing, and
   wherein each handling component is pneumatically or hydraulically driven;
   at least one controller configured for controlling at least one handling component; and
   circuitry configurable to provide adaptive and automatic switching among a plurality of modes of operation that comprise, at least a pneumatic mode and a hydraulic mode, wherein the circuitry is configured to, when providing the adaptive and automatic switching:
      determine hardware configuration of the system;
      select, based on the hardware configuration a mode of operation, wherein the selected mode of operation is one of the pneumatic mode and the hydraulic mode; and
      when needed, cause a switch to the determined mode of operation.
Clause 2. The system of clause 1, wherein the circuitry is configured to, when determining the hardware configuration:
   determine a type of each of the one or more handling components;
   determine a connection related information for each of the at least one controller and the one or more handling components; and
   determine a power status for each of the at least one controller and the one or more handling components.
Clause 3. The system of clause 1, wherein the circuitry is further configured to determine that software configuration of the system and/or at least one component of the system matches and/or is compatible with the determined hardware configuration.
Clause 4. The system of clause 3, wherein the circuitry is further configured to, in response to a determination that the software configuration does not match and/or is incompatible with the determined hardware configuration, trigger one or more actions.
Clause 5. The system of clause 4, wherein the one or more actions comprise at least one of setting error and disabling the system.
Clause 6. The system of clause 1, wherein the circuitry is further configured to re-determine the hardware configuration of the system.
Clause 7. The system of clause 6, wherein the circuitry is configured to re-determine the hardware configuration of the system continually, periodically, or in response to one or more triggers.
Clause 8. The system of clause 1, wherein the one or more handling components comprise at least one of a handset or a grip.
Clause 9. The system of clause 1, wherein the at least one controller comprises a hydraulic grip controller.
Clause 10. The system of clause 1, wherein the at least one controller component comprises at least a portion of the circuitry.
Clause 11. The system of clause 1, wherein the system further comprises a primary frame, and wherein the one or more handling components are configured for operation in conjunction with the primary frame.
Clause 12. The system of clause 11, wherein the primary frame comprises at least a portion of the circuitry.
Clause 13. A method comprising:
   in a system that supports mechanical testing operations, the system comprising one or more handling components for use in conjunction with handling material during the mechanical testing and at least one controller configured for controlling at least one handling component;
   wherein each handling component is pneumatically or hydraulically driven, providing adaptive and automatic switching among a plurality of modes of operation;
   wherein the plurality of modes of operation comprises at least a pneumatic mode and a hydraulic mode; and
   wherein providing the adaptive and automatic switching comprises:
      determining hardware configuration of the system;
      selecting, based on the hardware configuration a mode of operation, wherein the selected mode of operation is one of the pneumatic mode and the hydraulic mode; and
      when needed, causing a switch to the determined mode of operation.
Clause 14. The method of clause 13, wherein determining the hardware configuration comprises:
   determining a type of each of the one or more handling components;
   determining a connection related information for each of the at least one controller and the one or more handling components; and
   determining a power status for each of the at least one controller and the one or more handling components.
Clause 15. The method of clause 13, further comprising determining that software configuration of the system and/or at least one component of the system matches and/or is compatible with the determined hardware configuration.
Clause 16. The method of clause 15, further comprising, in response to a determination that the software configuration does not match and/or is incompatible with the determined hardware configuration, triggering one or more actions.
Clause 17. The method of clause 16, wherein the one or more actions comprise at least one of setting error and disabling the system.
Clause 18. The method of clause 15, further comprising re-determining the hardware configuration of the system.
Clause 19. The method of clause 18, further comprising re-determining the hardware configuration of the system continually, periodically, or in response to one or more triggers.

## Claims

1. A system comprising:
one or more handling components configured for supporting mechanical testing,
wherein each handling component is configured for use in conjunction with handling material during the mechanical testing, and
wherein each handling component is pneumatically or hydraulically driven;
at least one controller configured for controlling at least one handling component; and
circuitry configurable to provide adaptive and automatic switching among a plurality of modes of operation that comprise, at least a pneumatic mode and a hydraulic mode, wherein the circuitry is configured to, when providing the adaptive and automatic switching:
determine hardware configuration of the system;
select, based on the hardware configuration a mode of operation, wherein the selected mode of operation is one of the pneumatic mode and the hydraulic mode; and
when needed, cause a switch to the determined mode of operation.

2. The system of claim 1, wherein the circuitry is configured to, when determining the hardware configuration:
determine a type of each of the one or more handling components;
determine a connection related information for each of the at least one controller and the one or more handling components; and
determine a power status for each of the at least one controller and the one or more handling components.

3. The system of claim 1 or claim 2, wherein the circuitry is further configured to determine that software configuration of the system and/or at least one component of the system matches and/or is compatible with the determined hardware configuration.

4. The system of claim 3, wherein the circuitry is further configured to, in response to a determination that the software configuration does not match and/or is incompatible with the determined hardware configuration, trigger one or more actions, and optionally wherein the one or more actions comprise at least one of setting error and disabling the system.

5. The system of any one of claims 1 to 4, wherein the circuitry is further configured to re-determine the hardware configuration of the system, and optionally wherein the circuitry is configured to re-determine the hardware configuration of the system continually, periodically, or in response to one or more triggers.

6. The system of any one of claims 1 to 5, wherein the one or more handling components comprise at least one of a handset or a grip.

7. The system of any one of claims 1 to 6, wherein the at least one controller comprises a hydraulic grip controller.

8. The system of any one of claims 1 to 7, wherein the at least one controller component comprises at least a portion of the circuitry.

9. The system of any one of claims 1 to 8, wherein the system further comprises a primary frame, and wherein the one or more handling components are configured for operation in conjunction with the primary frame.

10. The system of claim 9, wherein the primary frame comprises at least a portion of the circuitry.

11. A method comprising:
in a system that supports mechanical testingoperations, the system comprising one or more handling components for use in conjunction with handling material during the mechanical testing and at least one controller configured for controlling at least one handling component;
wherein each handling component is pneumatically or hydraulically driven, providing adaptive and automatic switching among a plurality of modes of operation;
wherein the plurality of modes of operation comprises at least a pneumatic mode and a hydraulic mode; and
wherein providing the adaptive and automatic switching comprises:
determining hardware configuration of the system;
selecting, based on the hardware configuration a mode of operation, wherein the selected mode of operation is one of the pneumatic mode and the hydraulic mode; and
when needed, causing a switch to the determined mode of operation.

12. The method of claim 11, wherein determining the hardware configuration comprises:
determining a type of each of the one or more handling components;
determining a connection related information for each of the at least one controller and the one or more handling components; and
determining a power status for each of the at least one controller and the one or more handling components.

13. The method of claim 11 or claim 12, further comprising determining that software configuration of the system and/or at least one component of the system matches and/or is compatible with the determined hardware configuration.

14. The method of claim 13, further comprising, in response to a determination that the software configuration does not match and/or is incompatible with the determined hardware configuration, triggering one or more actions, and optionally wherein the one or more actions comprise at least one of setting error and disabling the system.

15. The method of claim 13 or claim 14, further comprising re-determining the hardware configuration of the system, and optionally, the method further comprising re-determining the hardware configuration of the system continually, periodically, or in response to one or more triggers.
